# EUROPÄISCHE PATENTSCHRIFT

(11) **EP 4 350 297 B1**
(45) Veröffentlichungstag und Bekanntmachung des Hinweises auf die Patenterteilung: **11.11.2026**
(21) Anmeldenummer: 23195167.4
(22) Anmeldetag: 04.09.2023
(51) Int. Cl.: G01C 21/36

(54) **VERFAHREN UND STEUERVORRICHTUNG ZUM ANSTEUERN EINER ANZEIGEVORRICHTUNG EINES NAVIGATIONSSYSTEMS EINES FAHRZEUGES, ANZEIGEVORRICHTUNG UND FAHRZEUG**
METHOD AND CONTROL DEVICE FOR CONTROLLING A DISPLAY DEVICE OF A NAVIGATION SYSTEM OF A VEHICLE, DISPLAY DEVICE AND VEHICLE
PROCÉDÉ ET DISPOSITIF DE COMMANDE POUR COMMANDER UN DISPOSITIF D'AFFICHAGE D'UN SYSTÈME DE NAVIGATION D'UN VÉHICULE, DISPOSITIF D'AFFICHAGE ET VÉHICULE

(30) Priorität: 04.10.2022 DE 102022210497
(43) Veröffentlichungstag der Anmeldung: 10.04.2024
(73) Patentinhaber: Volkswagen Aktiengesellschaft, 38440 Wolfsburg (DE)
(72) Erfinder: Kunze, Alexander, 38118 Braunschweig (DE); Tebaibi, Yannis, 38106 Braunschweig (DE)

(56) Entgegenhaltungen:
- US-A1- 2021 372 810
- US-A1- 2022 118 983

## Beschreibung

Die Erfindung betrifft ein Verfahren zum Ansteuern einer Anzeigevorrichtung eines Navigationssystems eines Fahrzeuges. Ferner betrifft die Erfindung ein korrespondierendes Computerprogrammprodukt zum Durchführen eines entsprechenden Verfahrens. Weiterhin betrifft die Erfindung eine korrespondierende Steuervorrichtung zum Durchführen eines entsprechenden Verfahrens. Des Weiteren betrifft die Erfindung eine korrespondierende Anzeigevorrichtung mit einer entsprechenden Steuervorrichtung sowie ein korrespondierendes Fahrzeug mit einer entsprechenden Anzeigevorrichtung.

In modernen Fahrzeugen werden immer Anzeigen eingesetzt, die den Betrieb des Fahrzeuges unterstützen sollen. Einige Anzeigen im Kontext der Automobilnavigation zeigen eine Soll-Spur auf einer Fahrbahn auf einer grafischen Repräsentation der Umgebung. Derartige Informationen benötigen eine hochauflösende Darstellung sowie viel Anzeigefläche, weswegen sie in den meisten Fällen in einem Kombiinstrument oder auf einem zentralen Fahrzeugbildschirm angezeigt werden, was allerdings eine Blickabwendung des Benutzers von der Umgebung zu der Anzeige bedingt. Zudem muss die dargestellte Information kognitiv von der Grafik auf die Realität übertragen werden, d. h. der Benutzer muss permanent zwischen grafischer Repräsentation und tatsächlicher Verkehrslage abgleichen. Dies bedingt einen hohen kognitiven Aufwand für einen Benutzer des Fahrzeuges. Eine Anzeige in einem Head-Up-Display kann eine Blickabwendung des Benutzers abwenden. Nachteilig ist jedoch bei den Head-Up-Displays, dass ein sehr breites Sichtfeld (engl. "field of view", kurz FOV) erforderlich ist, um die Spurbegrenzungen einer Fahrbahn realitätsecht abzubilden. Insbesondere bei Abbiegemanövern, wenn das Sichtfeld auch die Nebenspur abdecken soll, stoßen die Head-Up-Displays an ihre Grenzen. Auch der Verbau von großen Head-Up-Displays gestaltet sich problematisch, weil der erforderliche Bauraum in vielen Fahrzeugen nicht realisiert werden kann.

Die Schrift US 2021/372810 A1 offenbart eine Anzeigesteuerungsvorrichtung sowie ein Verfahren, und die US 2022/118983 A1 offenbart eine Anzeigesteuerungsvorrichtung und ein Anzeigesteuerungsprogrammprodukt.

Aufgabe der Erfindung ist daher, ein verbessertes Verfahren zum Ansteuern einer Anzeigevorrichtung eines Navigationssystems eines Fahrzeuges bereitzustellen. Insbesondere ist es Aufgabe der Erfindung, ein verbessertes Verfahren zum Ansteuern einer Anzeigevorrichtung eines Navigationssystems eines Fahrzeuges bereitzustellen, welches eine Blickabwendung des Benutzers von dem Verkehrsgeschehen vermeidet, welches die kognitive Last auf den Benutzer beim Interpretieren des Verkehrsgeschehens mindert, welches einfach und mit wenig Rechenaufwand durchgeführt werden kann und welches die Möglichkeiten einer erweiterten Realität (engl. "augmented reality", kurz AR), insbesondere in Verbindung mit Head-Up-Displays, nutzt, um eine verbesserte, einfache, verständliche und intuitiv verständliche Darstellung von Navigationshinweisen im Blickfeld des Benutzers durch eine Fahrzeugscheibe, insbesondere bei einem Spurwechsel durch das Fahrzeug, zu ermöglichen. Ferner ist es Aufgabe der Erfindung, ein korrespondierendes Computerprogrammprodukt zum Durchführen eines entsprechenden Verfahrens zur Verfügung zu stellen. Weiterhin ist es Aufgabe der Erfindung, eine korrespondierende Steuervorrichtung zum Durchführen eines entsprechenden Verfahrens bereitzustellen. Des Weiteren ist es Aufgabe der Erfindung, eine korrespondierende Anzeigevorrichtung mit einer entsprechenden Steuervorrichtung sowie ein korrespondierendes Fahrzeug mit einer entsprechenden Anzeigevorrichtung zur Verfügung zu stellen.

Die erfindungsgemäße Aufgabe wird gelöst durch: ein Verfahren zum Ansteuern einer Anzeigevorrichtung eines Navigationssystems eines Fahrzeuges mit den Merkmalen des unabhängigen Verfahrensanspruches, ein korrespondierendes Computerprogrammprodukt zum Durchführen eines entsprechenden Verfahrens mit den Merkmalen des unabhängigen Computerprogrammproduktanspruches, eine korrespondierende Steuervorrichtung zum Durchführen eines entsprechenden Verfahrens mit den Merkmalen des unabhängigen Vorrichtungsanspruches, eine korrespondierende Anzeigevorrichtung mit den Merkmalen des nebengeordneten Vorrichtungsanspruches und ein korrespondierendes Fahrzeug mit den Merkmalen des weiteren nebengeordneten Vorrichtungsanspruches. Weitere Merkmale, Vorteile und Details der Erfindung ergeben sich aus den Unteransprüchen, der Beschreibung und den Zeichnungen. Dabei gelten Merkmale und Details, die im Zusammenhang mit einzelnen erfindungsgemäßen Aspekten beschrieben sind, selbstverständlich auch im Zusammenhang mit den anderen erfindungsgemäßen Aspekten und jeweils umgekehrt, sodass bezüglich der Offenbarung zu den einzelnen Erfindungsaspekten stets wechselseitig Bezug genommen wird bzw. werden kann.

Das Verfahren kann vorzugsweise für automatisiert, hochautomatisiert oder autonom fahrende Fahrzeuge verwendet werden.

Der Blick des Benutzers fällt durch das Sichtfeld der Anzeigevorrichtung und durch das Sichtfeld durch die Fahrzeugscheibe des Fahrzeuges auf die Umgebung des Fahrzeuges und somit auf die Fahrbahn vor dem Fahrzeug.

Das Display der Anzeigevorrichtung braucht dabei nicht die gesamte Breite der Fahrzeugscheibe abzudecken. Auch braucht das Display der Anzeigevorrichtung nicht das gesamte Sichtfeld durch die Fahrzeugscheibe abzudecken. Das Sichtfeld der Anzeigevorrichtung kann insbesondere kleiner sein als das Sichtfeld durch die Fahrzeugscheibe des Fahrzeuges.

Die Abstände im Rahmen der vorliegenden Erfindung werden auf einer ausgesuchten Hochkoordinate des Sichtfelds der Anzeigevorrichtung und/ oder des Sichtfelds durch die Fahrzeugscheibe vermessen.

Die Anzeigevorrichtung kann vorzugsweise Technologien der erweiterten Realität (engl. "augmented reality", kurz AR), insbesondere in Verbindung mit Head-Up-Displays, nutzen. Das Sichtfeld der Anzeigevorrichtung kann durch das Head-Up-Display bereitgestellt werden.

Mithilfe des Verfahrens kann eine verbesserte augmentierte Spurwechselanzeige mithilfe einer einfach ausgelegten Anzeigevorrichtung bereitgestellt werden, die im Vergleich zur Fahrzeugscheibe ein kleineres Sichtfeld aufweisen kann. Mittels der Platzierung einer Referenzlinie (in einem möglichen Ausführungsbeispiel gebildet durch mehrere Dreiecke) wird die Spurbegrenzung im Sichtfeld der Anzeigevorrichtung dargestellt. Die Darstellung erfolgt nicht überlagernd mit der eigentlichen Spurbegrenzung im Sichtfeld durch die Fahrzeugscheibe bzw. im Blick des Benutzers. Die Referenzlinie erscheint im Sichtfeld durch die Fahrzeugscheibe mit einem seitlichen Abstand zur Spurbegrenzung. Durch die Verwendung der Referenzlinie werden die Anforderungen an die Größe des Sichtfeldes der Anzeigevorrichtung geringer, da die Referenzlinie innerhalb der sichtbaren Spur vor dem Fahrzeug, wenn im Sichtfeld durch die Fahrzeugscheibe gesehen, liegen kann. Die bestimmte Positionierung der Referenzlinie in einem gezielt ausgewählten lateralen Abstand zur Spurbegrenzung, wenn im Sichtfeld durch die Fahrzeugscheibe gesehen, sorgt jedoch für einfache Wahrnehmung und intuitive Verständlichkeit der Darstellung der Spurbegrenzung und des damit verbundenen Spurwechselhinweises.

Die Referenzlinie kann ferner an die Straßenkrümmung angepasst, insbesondere dynamisch angepasst, werden.

Die Referenzlinie kann bspw. durch einen S-Schlag-Pfeil durchstoßen werden, um einen Spurwechselhinweis bereitzustellen.

Der Spurwechselhinweis kann ferner durch die Referenzlinie selbst bereitgestellt werden.

Die Referenzlinie kann auch mit einem musterartigen, schattierungstechnischen und/oder farblichen Verlauf versehen werden, welcher vorzugsweise in Richtung der Spurwechselaufforderung ansteigen kann.

Die Referenzlinie kann vorteilhafterweise so innerhalb des Sichtfelds durch die Fahrzeugscheibe platziert werden, dass die Referenzlinie die Sichtfeld-Begrenzung nicht schneidet und/oder die Perspektive der Referenzlinie im Vergleich zur Spurbegrenzung nicht verfälscht wird.

Die Referenzlinie im Sichtfeld der Anzeigevorrichtung kann entsprechend dem Größenunterschied zwischen dem Sichtfeld durch die Fahrzeugscheibe und dem Sichtfeld der Anzeigevorrichtung skaliert werden. Eine perspektivische Darstellung der Referenzlinie kann auf eine vorteilhafte Weise den AR-Effekt unterstützen. Dadurch ergibt sich ein vorteilhafter AR-Effekt, welcher zur Reduktion der kognitiven Belastung bei dem Benutzer beiträgt.

Unterstützt werden kann die Anzeige durch eine symbolische Darstellung von anderen Spuren, die ikonografisch darstellt werden können. Dadurch können mehrere notwendige Spurwechsel kommuniziert werden. Dies kann bspw. bei einer mehrspurigen Autobahn von Vorteil sein.

Somit kann auch bei Fahrzeugen, die einen begrenzten Bauraum und/oder kleine Anzeigevorrichtungen aufweisen, die Spurwechselaufforderung auf eine vorteilhafte Weise mithilfe der Technologien einer erweiterten Realität visualisiert werden.

Ferner kann vorgesehen sein, dass nur eine Referenzlinie für eine (bzw. pro eine) Spurwechselaufforderung dargestellt wird. Auf diese Weise kann eine einfache Darstellung der Spurbegrenzung ermöglicht werden. Somit können der Rechenbedarf bei der Steuerung und die Anforderungen an die Grafik reduziert werden.

Weiterhin ist vorgesehen, dass bei einer mehrfachen Spurwechselaufforderung jeweils eine Referenzlinie pro bevorstehendem Spurwechsel abgebildet wird, wobei die Referenzlinien entsprechend einer Reihenfolge bevorstehender Spurwechsel, insbesondere nacheinander, angeordnet werden. Auf diese Weise können mehrere notwendige Spurwechsel mithilfe von AR-Effekten kommuniziert werden. Dies kann bspw. bei einer mehrspurigen Autobahn von Vorteil sein.

Des Weiteren kann vorgesehen sein, dass der bestimmte laterale Abstand derart eingestellt wird, dass die Referenzlinie im Wesentlichen ein gesamtes Erscheinungsbild der Spurbegrenzung im Sichtfeld durch die Fahrzeugscheibe auf das Sichtfeld der Anzeigevorrichtung abbildet, ohne eine Begrenzung des Sichtfelds der Anzeigevorrichtung in Richtung zur Spurbegrenzung zu schneiden und/oder ohne die Perspektive der Referenzlinie im Vergleich zur Perspektive der Spurbegrenzung zu verfälschen. Auf diese Weise kann eine verständliche Darstellung der Spurbegrenzung auch mithilfe von kleinen Anzeigevorrichtungen ermöglicht werden.

Erfindungsgemäß ist vorgesehen, dass der bestimmte laterale Abstand derart eingestellt wird, dass ein Verhältnis zwischen der Breite des Sichtfeldes durch die Fahrzeugscheibe und der Breite des Sichtfeldes der Anzeigevorrichtung berücksichtigt wird. Auf diese Weise können die konstruktiven Begebenheiten im Fahrzeug auf eine vorteilhafte Weise berücksichtigt werden, um den AR-Effekt möglichst zu verstärken.

Dabei ist vorgesehen, dass der bestimmte laterale Abstand proportional zu einem Verhältnis zwischen der Breite des Sichtfeldes durch die Fahrzeugscheibe und der Breite des Sichtfelds der Anzeigevorrichtung eingestellt wird. Somit kann ermöglicht werden, dass bei kleineren Anzeigevorrichtungen im Vergleich zum Sichtfeld durch die Fahrzeugscheibe ein größerer Abstand eingestellt werden kann als bei größeren Anzeigevorrichtungen. Somit kann eine reproduzierbare Darstellung der Spurbegrenzung auf unterschiedlich großen Anzeigevorrichtungen bereitgestellt werden. Auch ein Wechsel zwischen unterschiedlich großen Anzeigevorrichtungen oder unterschiedlich großen Schaltbereichen der Anzeigevorrichtungen wird dadurch möglich.

Ferner kann vorgesehen sein, dass die Referenzlinie im Sichtfeld der Anzeigevorrichtung im Verhältnis zu einem Erscheinungsbild der Spurbegrenzung im Sichtfeld durch die Fahrzeugscheibe entsprechend perspektivisch dargestellt wird. Auf diese Weise kann ein vorteilhafter AR-Effekt erzeugt werden, welcher zur wesentlicher Reduktion der kognitiven Belastung bei dem Benutzer beitragen kann.

Weiterhin kann vorgesehen sein, dass die Referenzlinie im Sichtfeld der Anzeigevorrichtung in einem Proportionsverhältnis dargestellt wird, welches einem Verhältnis zwischen der Breite des Sichtfelds der Anzeigevorrichtung und einer Breite des Sichtfeldes durch die Fahrzeugscheibe entspricht. Somit können die konstruktiven Begebenheiten im Fahrzeug auf eine vorteilhafte Weise berücksichtigt werden, um einen verbesserten AR-Effekt zu erzielen.

Erfindungsgemäß ist des weiteren vorgesehen, dass die Referenzlinie mit einem zweiten lateralen Abstand zu einer Begrenzung des Sichtfelds der Anzeigevorrichtung in Richtung zur Spurbegrenzung angeordnet wird. Auf diese Weise kann eine Überschneidung der Begrenzung des Sichtfelds durch die Referenzlinie verhindert werden, die den visuellen Effekt beeinträchtigen könnte.

Erfindungsgemäß wird der zweite laterale Abstand zwischen der Referenzlinie und der Begrenzung des Sichtfelds der Anzeigevorrichtung im Verhältnis zu einem dritten lateralen Abstand der Spurbegrenzung zu einer korrespondierenden Begrenzung des Sichtfeldes durch die Fahrzeugscheibe eingestellt, in einem Proportionsverhältnis, welches im Wesentlichen einem Verhältnis zwischen der Breite des Sichtfelds der Anzeigevorrichtung und der Breite des Sichtfeldes durch die Fahrzeugscheibe entspricht. Auf diese Weise kann eine einfache Darstellung der Spurbegrenzung ermöglicht werden, die wenig Rechenbedarf bei der Steuerung erfordert.

Um die visuelle Wahrnehmbarkeit der Darstellung zu erhöhen, kann die Referenzlinie durch eine Vielzahl an, insbesondere symmetrisch zueinander angeordneten Zeichen, bspw. in Form von Dreiecken, dargestellt werden.

Darüber hinaus ist es denkbar, dass die Referenzlinie mit einer Schattierung dargestellt werden kann, die insbesondere in Richtung der Spurwechselaufforderung intensiver dargestellt wird, und/oder dass die Referenzlinie mit einem Musterverlauf dargestellt werden kann, der insbesondere in Richtung zu Spurwechselaufforderung dichter dargestellt wird, und/oder dass die Referenzlinie mit einem Farbverlauf dargestellt werden kann, der sich insbesondere in Richtung der Spurwechselaufforderung ändert. Somit können unterschiedliche Darstellungen des Spurwechselhinweises ermöglicht werden.

Vorteilhafterweise können unterschiedliche Darstellungen der Referenzlinie im Rahmen von Benutzereinstellungen bereitgestellt werden. Auf diese Weise kann die Benutzerfreundlichkeit beim Durchführen des Verfahrens erhöht werden.

Zudem ist es denkbar, dass der Spurwechselhinweis in Form eines Richtungshinweises, insbesondere in Form eines S-Schlag-Pfeils, dargestellt werden kann, der vorzugsweise die Referenzlinie durchstoßen kann. Auf diese Weise kann eine einfache Darstellung des Spurwechselhinweises ermöglicht werden, die geringe Anforderungen an die Grafik aufweist.

Außerdem ist es denkbar, dass der Spurwechselhinweis durch die Referenzlinie selbst dargestellt werden kann. Auf diese Weise kann eine ansprechende, leicht verständliche Darstellung des Spurwechselhinweises ermöglicht werden.

Vorteilhafterweise können unterschiedliche Darstellungen des Spurwechselhinweises im Rahmen von Benutzereinstellungen bereitgestellt werden. Auf diese Weise kann die Benutzerfreundlichkeit beim Durchführen des Verfahrens erhöht werden.

Ferner stellt die Erfindung bereit: ein Computerprogrammprodukt, umfassend Befehle, die bei der Ausführung des Computerprogramms durch einen Computer diesen veranlassen, ein Verfahren durchzuführen, welches wie oben beschrieben ablaufen kann. Mithilfe des erfindungsgemäßen Computerprogrammproduktes können die gleichen Vorteile erreicht werden, die im Zusammenhang mit dem oben beschriebenen Verfahren beschrieben wurden. Auf diese Vorteile wird vorliegend vollumfänglich Bezug genommen.

Weiterhin stellt die Erfindung bereit: eine Steuervorrichtung zum Ansteuern einer Anzeigevorrichtung eines Navigationssystems eines Fahrzeuges, aufweisend: eine Speichervorrichtung und eine Rechenvorrichtung, wobei in der Speichervorrichtung ein Code hinterlegt ist, und wobei beim Ausführen des Codes durch die Rechenvorrichtung ein Verfahren durchgeführt wird, welches wie oben beschrieben ablaufen kann. Mithilfe der erfindungsgemäßen Steuervorrichtung können die gleichen Vorteile erreicht werden, die im Zusammenhang mit dem oben beschriebenen Verfahren erläutert wurden. Auf diese Vorteile wird vorliegend vollumfänglich Bezug genommen.

Des Weiteren stellt die Erfindung bereit: eine Anzeigevorrichtung, aufweisend eine Steuervorrichtung, die wie oben beschrieben ausgeführt sein kann. Mithilfe der erfindungsgemäßen Anzeigevorrichtung können die gleichen Vorteile erreicht werden, die im Zusammenhang mit dem oben beschriebenen Verfahren erläutert wurden. Auf diese Vorteile wird vorliegend vollumfänglich Bezug genommen.

Zudem stellt die Erfindung bereit: ein Fahrzeug, aufweisend eine Anzeigevorrichtung, die wie oben beschrieben ausgeführt sein kann. Mithilfe des erfindungsgemäßen Fahrzeuges können die gleichen Vorteile erreicht werden, die im Zusammenhang mit dem oben beschriebenen Verfahren erläutert wurden. Auf diese Vorteile wird vorliegend vollumfänglich Bezug genommen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

Es zeigen:
- Fig. 1: eine schematische Darstellung einer Spurbegrenzung,
- Fig. 2: eine weitere mögliche Darstellung einer Spurbegrenzung, und
- Fig. 3: eine alternative Darstellung, welche nicht der beanspruchten Erfindung entspricht.

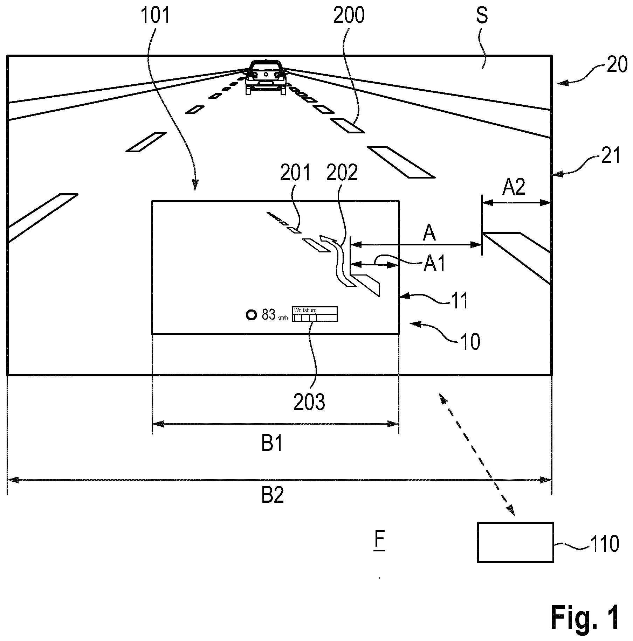

Die Fig. 1 - 2 dienen zum Erklären eines Verfahrens zum Ansteuern einer Anzeigevorrichtung 101 eines Navigationssystems 100 eines Fahrzeuges F, insbesondere eines automatisiert, hochautomatisiert oder autonom fahrenden Fahrzeuges F. Die Anzeigevorrichtung 101 kann bspw. ein Head-Up-Display aufweisen, um Navigationshinweise im Blickfeld des Benutzers durch die Fahrzeugscheibe S darzustellen, insbesondere bei einem Spurwechsel durch das Fahrzeug F.

Das Verfahren, aufweisend:
- Erfassen einer Spurwechselaufforderung.

Dabei ist es denkbar, dass die Spurwechselaufforderung von einem Benutzer des

Fahrzeuges F als Fahrer und/oder von einer Steuervorrichtung des Fahrzeuges F kommen kann, wenn das Fahrzeug F in einem automatisierten Modus fährt oder als ein autonomes Fahrzeug ausgeführt ist.

Unter einer Spurwechselaufforderung kann außerdem eine Abbiegeanforderung verstanden werden.

Das Verfahren, ferner aufweisend:
- Bestimmen einer Spurbegrenzung 200 für die Spurwechselaufforderung.

Unter einer Spurbegrenzung kann eine Fahrbahnbegrenzung, Fahrstreifenbegrenzung und/oder eine Fahrbahnmarkierung verstanden werden.

Das Verfahren, ferner aufweisend:
- Bereitstellen einer Referenzlinie 201 für die Spurbegrenzung 200 in einem Sichtfeld 10 der Anzeigevorrichtung 101.

Unter einer Referenzlinie wird ein grafisches Abbild der Spurbegrenzung 200 auf einem

Display der Anzeigevorrichtung 101 verstanden.

Die Größe eines korrespondierenden Displays der Anzeigevorrichtung 101 kann dabei das Sichtfeld der Anzeigevorrichtung 101 bestimmen.

Das Verfahren, ferner aufweisend:
- Bereitstellen eines Spurwechselhinweises 202 mithilfe der Referenzlinie 201 auf der Anzeigevorrichtung 101.

Unter einem Spurwechselhinweis 202 kann eine grafische Information verstanden werden, die die Richtung des Spurwechsels gemäß der Spurwechselaufforderung visualisieren soll.

Unter einem Spurwechselhinweis kann ferner ein Abbiegehinweis verstanden werden.

Bei dem Verfahren ist es vorgesehen, dass die Referenzlinie 201 derart in einem Sichtfeld 10 der Anzeigevorrichtung 101 angeordnet wird, dass die Referenzlinie 201 in einem Sichtfeld 20 durch eine Fahrzeugscheibe S des Fahrzeuges F auf einem bestimmten, insbesondere gezielt ausgewählten, lateralen Abstand A zur Spurbegrenzung 200 erscheint.

Der Blick des Benutzers fällt durch das Sichtfeld 10 der Anzeigevorrichtung 101 und durch das Sichtfeld 20 durch die Fahrzeugscheibe S des Fahrzeuges F auf die Umgebung des Fahrzeuges und somit auf die Fahrbahn vor dem Fahrzeug.

Das Display der Anzeigevorrichtung 101 kann dabei kleiner als die Fahrzeugscheibe S ausgelegt werden. Das Display bzw. das Sichtfeld 10 der Anzeigevorrichtung 101 braucht dabei nicht das gesamte Sichtfeld 20 durch die Fahrzeugscheibe S abzudecken.

Somit kann eine verbesserte augmentierte Spurwechselanzeige realisiert werden, die vorzugsweise mithilfe einer einfach ausgelegten Anzeigevorrichtung 101 bereitgestellt werden kann, die im Vergleich zur Fahrzeugscheibe S ein kleineres Sichtfeld 10 aufweisen kann.

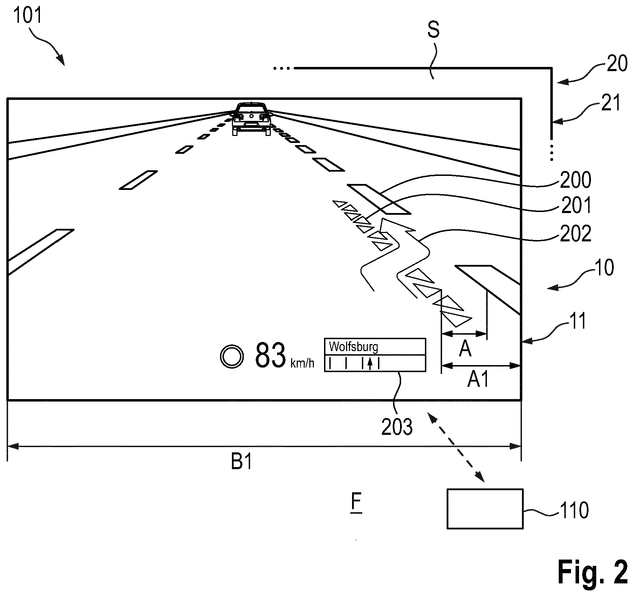

Durch die Referenzlinie 201 (in einem möglichen Ausführungsbeispiel der Fig. 2 gebildet durch mehrere Dreiecke) wird die Spurbegrenzung 200 im Sichtfeld 10 der Anzeigevorrichtung 101 dargestellt. Die Darstellung der Spurbegrenzung 200 erfolgt nicht überlagernd mit der eigentlichen Spurbegrenzung 200, gesehen im Sichtfeld 20 durch die Fahrzeugscheibe S bzw. im Blick des Benutzers. Die Referenzlinie erscheint im Sichtfeld 20 durch die Fahrzeugscheibe S mit einem seitlichen Abstand A zur Spurbegrenzung 200. Die Referenzlinie 201 erscheint somit innerhalb der sichtbaren Spur vor dem Fahrzeug F. Die bestimmte Positionierung der Referenzlinie erfolgt in einem gezielt ausgewählten lateralen Abstand zur Spurbegrenzung 200 für einfache Wahrnehmung und intuitive Verständlichkeit der Darstellung der Spurbegrenzung 200 und des damit verbundenen Spurwechselhinweises 202.

Die Referenzlinie 201 kann ferner an die Straßenkrümmung angepasst werden. Die Anpassung kann dynamisch erfolgen.

Wie es die Fig. 2 andeutet, kann die Referenzlinie 201 durch eine Vielzahl an, insbesondere symmetrisch zueinander angeordneten Zeichen, bspw. in Form von Dreiecken, dargestellt werden.

Wie es die Fig. 1 und 2 zeigen, kann die Referenzlinie 201 bspw. durch einen S-Schlag-Pfeil durchstoßen werden, um einen Spurwechselhinweis 202 bereitzustellen. Der Pfeil kann dabei in Richtung des Spurwechsels zeigen.

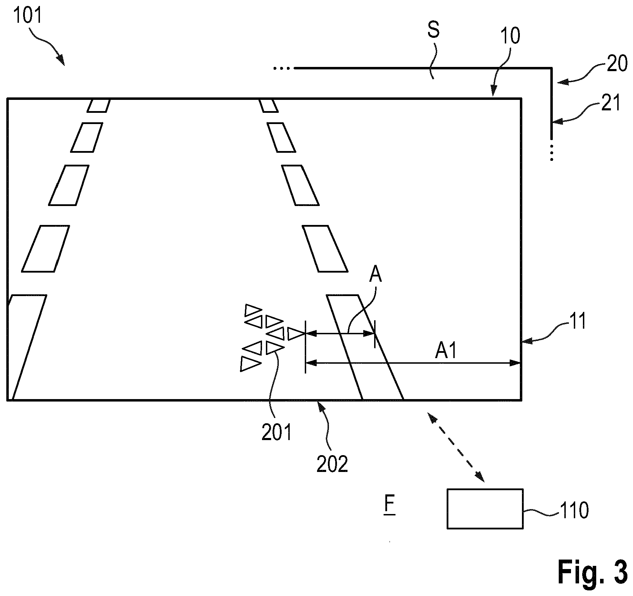

Wie es die Fig. 3 zeigt, kann der Spurwechselhinweis 202 in einem alternativen Beispiel, welches nicht der beanspruchten Erfindung entspricht, durch eine entsprechende Krümmung, Beugung und/oder einen Knick der Referenzlinie 201, vorzugsweise in Richtung der Spurwechselaufforderung bereitgestellt werden.

Unterschiedliche Darstellungen der Referenzlinie 201 und/oder des Spurwechselhinweises 202 können im Rahmen von Benutzereinstellungen zur Auswahl durch den Benutzer bereitgestellt werden.

Die Referenzlinie 201 kann auch mit einem musterartigen, schattierungstechnischen und/oder farblichen Verlauf versehen werden, welcher vorzugsweise in Richtung der Spurwechselaufforderung ansteigen bzw. intensiviert werden kann.

Die Referenzlinie kann vorteilhafterweise so innerhalb des Sichtfelds 20 durch die Fahrzeugscheibe im Blickfeld des Benutzers platziert werden, dass die Referenzlinie 201 eine Sichtfeld-Begrenzung 11 des Sichtfelds 10 der Anzeigevorrichtung 101 nicht schneidet und/oder die Perspektive der Referenzlinie 201 im Vergleich zur Spurbegrenzung 200 nicht verfälscht wird.

Die Referenzlinie im Sichtfeld 10 der Anzeigevorrichtung 101 kann entsprechend dem Größenunterschied zwischen dem Sichtfeld 20 durch die Fahrzeugscheibe S und dem Sichtfeld 10 der Anzeigevorrichtung 101 skaliert werden. Eine perspektivische Darstellung der Referenzlinie 201 kann auf eine vorteilhafte Weise den AR-Effekt unterstützen. Dadurch ergibt sich auch bei kleineren Anzeigevorrichtungen 101 ein vorteilhafter AR-Effekt, wodurch die Spurwechselaufforderung einfach wahrgenommen und intuitiv verstanden werden kann.

Unterstützt werden kann die Anzeige durch eine symbolische Darstellung 203 von anderen Spuren, die ikonografisch darstellt werden können. Dadurch können mehrere notwendige Spurwechsel kommuniziert werden. Dies kann bspw. bei einer mehrspurigen Autobahn von Vorteil sein.

Somit kann auch bei Fahrzeugen F, die einen begrenzten Bauraum für Anzeigevorrichtungen 101 aufweisen, die Spurwechselaufforderung auf eine vorteilhafte Weise mithilfe der Technologien einer erweiterten Realität visualisiert werden.

Grundsätzlich kann eine, insbesondere ausschließlich eine, Referenzlinie 201 pro Spurwechselaufforderung dargestellt werden.

Weiterhin kann bei einer mehrfachen Spurwechselaufforderung jeweils eine Referenzlinie 201 pro einen bevorstehenden Spurwechsel abgebildet werden, wobei insbesondere die Referenzlinien 201 entsprechend einer Reihenfolge bevorstehender Spurwechsel, insbesondere nacheinander, angeordnet werden können.

Der bestimmte laterale Abstand A zwischen der Referenzlinie 201 und der tatsächlichen Spurbegrenzung 200 wird derart eingestellt, dass ein Verhältnis V21 zwischen einer Breite B2 des Sichtfeldes 20 durch die Fahrzeugscheibe S und einer Breite B1 des Sichtfeldes 10 der Anzeigevorrichtung 101 berücksichtigt wird:$A = f \left(V21\right) , V 21 = B 2 / B 1 .$

Bei unterschiedlich großen Anzeigevorrichtungen 101 wird der bestimmte laterale Abstand A proportional zu einem Verhältnis V21 zwischen einer Breite B2 des Sichtfeldes 20 durch die Fahrzeugscheibe S und einer Breite B1 des Sichtfelds 10 der Anzeigevorrichtung 101 eingestellt:$A \approx V 21 = B 2 / B 1 .$

Wie es die Fig. 1 und 2 andeuten, kann die Referenzlinie 201 im Sichtfeld 10 der Anzeigevorrichtung 101 im Verhältnis zu einem Erscheinungsbild der Spurbegrenzung 200 im Sichtfeld 20 durch die Fahrzeugscheibe S entsprechend perspektivisch dargestellt werden. Als Proportionsverhältnis kann dabei ein Verhältnis V12 zwischen einer Breite B1 des Sichtfelds 10 der Anzeigevorrichtung 101 und einer Breite B2 des Sichtfeldes 20 durch die Fahrzeugscheibe S gewählt werden:$V 12 = B 1 / B 2 .$

Wie es die Fig. 1 und 2 andeuten, wird die Referenzlinie 201 mit einem zweiten lateralen Abstand A1 zu einer Begrenzung 11 des Sichtfelds 10 der Anzeigevorrichtung 101 in Richtung zur Spurbegrenzung 200 angeordnet.

Dabei wird der zweite laterale Abstand A1 zwischen der Referenzlinie 201 und der Begrenzung 11 des Sichtfelds 10 der Anzeigevorrichtung 101 im Verhältnis V12 zu einem dritten lateralen Abstand A2 der Spurbegrenzung 200 zu einer korrespondierenden Begrenzung 21 des Sichtfeldes 20 durch die Fahrzeugscheibe S eingestellt, in einem Proportionsverhältnis, welches dem Verhältnis V12 zwischen der Breite B1 des Sichtfelds 10 der Anzeigevorrichtung 101 und der Breite B2 des Sichtfeldes 20 durch die Fahrzeugscheibe S entspricht: $V 12 = A 1 / A 2 = B 1 / B 2 .$

Sämtliche Abstände A, A1, A2 werden auf einer beliebigen Hochkoordinate des Sichtfeldes 10 und/oder des Sichtfeldes 20 vermessen, jedoch zwischen jeweils korrespondierenden Teilen der Referenzlinie 201 und der Spurbegrenzung 202, beziehungsweise zwischen der Referenzlinie 201 beziehungsweise der Spurbegrenzung 202 und der jeweiligen Begrenzung 11, 21. Vorteilhafterweise ändern sich die erwähnten Verhältnisse V21, V12 im Hinblick auf die Breite B1, B2 der Sichtfelder 10, in Abhängigkeit von der ausgesuchten Hochkoordinate nicht.

Die Fig. 1 - 2 zeigen schematisch eine Steuervorrichtung 110 zum Ansteuern einer Anzeigevorrichtung 101 eines Navigationssystems 100 eines Fahrzeuges F, die ebenfalls einen Aspekt der Erfindung darstellt.

Die Fig. 1 - 2 zeigen schematisch eine Anzeigevorrichtung 101, die ebenfalls einen Aspekt der Erfindung darstellt.

Die Fig. 1 - 2 deuten schematisch ein Fahrzeug F an, das ebenfalls einen Aspekt der Erfindung darstellt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Sichtfeld
- 11: Begrenzung

- 20: Sichtfeld
- 21: Begrenzung

- 100: Navigationssystem
- 101: Anzeigevorrichtung
- 110: Steuervorrichtung

- 200: Spurbegrenzung
- 201: Referenzlinie
- 202: Spurwechselhinweis
- 203: symbolische/ikonografische Darstellung

- A: Abstand

- B1: Breite
- B2: Breite

- F: Fahrzeug
- S: Fahrzeugscheibe

- V12: Verhältnis
- V21: Verhältnis

## Patentansprüche

1. Verfahren zum Ansteuern einer Anzeigevorrichtung (101) eines
Navigationssystems (100) eines Fahrzeuges (F), insbesondere bei einem Spurwechsel durch das Fahrzeug (F),
das Verfahren aufweisend:
- Erfassen einer Spurwechselaufforderung,
- Bestimmen einer Spurbegrenzung (200) für die Spurwechselaufforderung,
- Bereitstellen einer Referenzlinie (201) für die Spurbegrenzung (200) in einem Sichtfeld (10) der Anzeigevorrichtung (101), wobei die Referenzlinie (201) ein grafisches Abbild der Spurbegrenzung (200) auf einem Display der Anzeigevorrichtung (101) bereitstellt,
- Bereitstellen eines Spurwechselhinweises (202) mithilfe der Referenzlinie (201) auf der Anzeigevorrichtung (101),
wobei die Referenzlinie (201) derart in einem Sichtfeld (10) der Anzeigevorrichtung (101) angeordnet wird,
dass die Referenzlinie (201) in einem Sichtfeld (20) durch eine Fahrzeugscheibe (S) des Fahrzeuges (F) auf einem bestimmten lateralen Abstand (A) zur Spurbegrenzung (200) positioniert wird, wobei der bestimmte laterale Abstand (A) proportional zu dem Verhältnis (V21) zwischen einer Breite (B2) des Sichtfeldes (20) durch die Fahrzeugscheibe (S) und einer Breite (B1) des Sichtfelds (10) der Anzeigevorrichtung (101) eingestellt wird,
wobei die Referenzlinie (201) mit einem zweiten lateralen Abstand (A1) zu einer Begrenzung (11) des Sichtfelds (10) der Anzeigevorrichtung (101) in Richtung zur Spurbegrenzung (200) angeordnet wird, wobei der zweite laterale Abstand (A1) im Verhältnis zu einem dritten lateralen Abstand (A2) der Spurbegrenzung (200) zu einer korrespondierenden Begrenzung (21) des Sichtfeldes (20) durch die Fahrzeugscheibe (S) in einem Proportionsverhältnis, welches im Wesentlichen einem Verhältnis (V12) zwischen der Breite (B1) des Sichtfelds (10) der Anzeigevorrichtung (101) und der Breite (B2) des Sichtfeldes (20) durch die Fahrzeugscheibe (S) entspricht, eingestellt wird, wobei der bestimmte laterale Abstand (A) auf einer Hochkoordinate des Sichtfeldes (10) der Anzeigevorrichtung und/oder des Sichtfeldes (20) durch die Fahrzeugscheibe zwischen korrespondierenden Teilen der Referenzlinie (201) und der Spurbegrenzung (200) vermessen wird, und wobei der zweite laterale Abstand (A1) und der dritte laterale Abstand (A2) auf
einer Hochkoordinate des Sichtfeldes (10) der Anzeigevorrichtung und/oder des Sichtfeldes (20) durch die Fahrzeugscheibe zwischen den korrespondierenden Teilen der Referenzlinie (201) beziehungsweise der Spurbegrenzung (200) sowie der jeweiligen Begrenzung (11, 21) vermessen werden.

2. Verfahren nach Anspruch 1,
wobei nur eine Referenzlinie (201) für eine Spurwechselaufforderung dargestellt wird,
und/oder wobei bei einer mehrfachen Spurwechselaufforderung jeweils eine Referenzlinie (201) pro bevorstehendem Spurwechsel abgebildet wird,
wobei insbesondere die Referenzlinien (201) entsprechend einer Reihenfolge bevorstehender Spurwechsel angeordnet werden.

3. Verfahren nach Anspruch 1 oder 2,
wobei der bestimmte laterale Abstand (A) derart eingestellt wird, dass die Referenzlinie im Wesentlichen ein gesamtes Erscheinungsbild der Spurbegrenzung (200) im Sichtfeld (20) durch die Fahrzeugscheibe (S) auf das Sichtfeld (10) der Anzeigevorrichtung (101) abbildet, ohne die Begrenzung (11) des Sichtfelds (10) der Anzeigevorrichtung (101) in Richtung zur Spurbegrenzung (200) zu schneiden und/oder ohne die Perspektive der Referenzlinie im Vergleich zur Perspektive der Spurbegrenzung (200) zu verfälschen.

4. Verfahren nach einem der vorhergehenden Ansprüche,
wobei die Referenzlinie (201) im Sichtfeld (10) der Anzeigevorrichtung (101) im Verhältnis zu einem Erscheinungsbild der Spurbegrenzung (200) im Sichtfeld (20) durch die Fahrzeugscheibe (S) entsprechend perspektivisch dargestellt wird,
und/oder wobei die Referenzlinie (201) im Sichtfeld (10) der Anzeigevorrichtung (101)
in einem Proportionsverhältnis dargestellt wird, welches im Wesentlichen einem Verhältnis (V12) zwischen der Breite (B1) des Sichtfelds (10) der Anzeigevorrichtung (101) und der Breite (B2) des Sichtfeldes (20) durch die Fahrzeugscheibe (S) entspricht.

5. Verfahren nach einem der vorhergehenden Ansprüche,
wobei die Referenzlinie (201) durch eine Vielzahl an, insbesondere symmetrisch zueinander angeordneten Zeichen, bspw. in Form von Dreiecken, dargestellt wird,
wobei die Referenzlinie (201) mit einer Schattierung dargestellt wird, die insbesondere in Richtung der Spurwechselaufforderung intensiver dargestellt wird,
wobei die Referenzlinie (201) mit einem Musterverlauf dargestellt wird, der insbesondere in Richtung zur Spurwechselaufforderung dichter dargestellt wird,
und/oder wobei die Referenzlinie (201) mit einem Farbverlauf dargestellt wird, der sich insbesondere in Richtung der Spurwechselaufforderung ändert,
und/oder wobei unterschiedliche Darstellungen der Referenzlinie (201) im Rahmen von Benutzereinstellungen bereitgestellt werden.

6. Verfahren nach einem der vorhergehenden Ansprüche,
wobei der Spurwechselhinweis (202) in Form eines Richtungshinweises, insbesondere in Form eines S-Schlag-Pfeils, dargestellt wird, der vorzugsweise die Referenzlinie (201) durchstößt,
und/oder wobei der Spurwechselhinweis (202) durch die Referenzlinie (201) selbst dargestellt wird,
und/oder wobei unterschiedliche Darstellungen des Spurwechselhinweises (202) im Rahmen von Benutzereinstellungen bereitgestellt werden.

7. Computerprogrammprodukt, umfassend Befehle, die bei der Ausführung des Computerprogramms durch einen Computer diesen veranlassen, ein Verfahren nach einem der vorhergehenden Ansprüche durchzuführen.

8. Steuervorrichtung (110) zum Ansteuern einer Anzeigevorrichtung (101) eines Navigationssystems (100) eines Fahrzeuges (F), aufweisend:
eine Speichervorrichtung und eine Rechenvorrichtung,
wobei in der Speichervorrichtung ein Code hinterlegt ist,
und wobei beim Ausführen des Codes durch die Rechenvorrichtung ein Verfahren nach einem der vorhergehenden Ansprüche durchgeführt wird.

9. Anzeigevorrichtung (101) eines Navigationssystems (100) eines Fahrzeuges (F), aufweisend eine Steuervorrichtung (110) nach dem vorhergehenden Anspruch.

10. Fahrzeug (F), aufweisend eine Anzeigevorrichtung (101) nach dem vorhergehenden Anspruch.

## Claims

1. Method for controlling a display device (101) of a navigation system (100) of a vehicle (F), in particular when the vehicle (F) changes lanes,
the method comprising:
- detecting a lane change request,
- determining a lane limit (200) for the lane change request,
- providing a reference line (201) for the lane limit (200) in a field of view (10) of the display device (101), wherein the reference line (201) provides a graphic representation of the lane limit (200) on a display of the display device (101),
- providing a lane change instruction (202) using the reference line (201) on the display device (101),
wherein the reference line (201) is arranged in a field of view (10) of the display device (101) such that
the reference line (201) is positioned in a field of view (20) through a vehicle window (S) of the vehicle (F) at a determined lateral distance (A) from the lane limit (200), wherein the determined lateral distance (A) is set proportionally to the ratio (V21) between a width (B2) of the field of view (20) through the vehicle window (S) and a width (B1) of the field of view (10) of the display device (101),
wherein the reference line (201) is arranged having a second lateral distance (A1) from a limit (11) of the field of view (10) of the display device (101) in the direction of the lane limit (200), wherein the second lateral distance (A1) is set in relation to a third lateral distance (A2) of the lane limit (200) from a corresponding limit (21) of the field of view (20) through the vehicle window (S) in a proportional ratio which substantially corresponds to a ratio (V12) between the width (B1) of the field of view (10) of the display device (101) and the width (B2) of the field of view (20) through the vehicle window (S), wherein the determined lateral distance (A) is measured on a vertical coordinate of the field of view (10) of the display device and/or the field of view (20) through the vehicle window between corresponding parts of the reference line (201) and the lane limit (200), and wherein the second lateral distance (A1) and the third lateral distance (A2) are measured on a vertical coordinate of the field of view (10) of the display device and/or the field of view (20) through the vehicle window between the corresponding parts of the reference line (201) or the lane limit (200) and the relevant limit (11, 21).

2. Method according to claim 1,
wherein only one reference line (201) is represented for a lane change request,
and/or wherein, in the case of multiple lane change requests, a reference line (201) is displayed for each upcoming lane change,
wherein, in particular, the reference lines (201) are arranged according to a sequence of upcoming lane changes.

3. Method according to claim 1 or 2,
wherein the determined lateral distance (A) is set such that the reference line substantially displays an entire appearance of the lane limit (200) in the field of view (20) through the vehicle window (S) onto the field of view (10) of the display device (101) without cutting the limit (11) of the field of view (10) of the display device (101) in the direction of the lane limit (200) and/or without distorting the perspective of the reference line compared to the perspective of the lane limit (200).

4. Method according to any of the preceding claims,
wherein the reference line (201) in the field of view (10) of the display device (101) is represented in perspective in relation to an appearance of the lane limit (200) in the field of view (20) through the vehicle window (S),
and/or wherein the reference line (201) in the field of view (10) of the display device (101) is represented in a proportional ratio which substantially corresponds to a ratio (V12) between the width (B1) of the field of view (10) of the display device (101) and the width (B2) of the field of view (20) through the vehicle window (S).

5. Method according to any of the preceding claims,
wherein the reference line (201) is represented by a large number of symbols which are in particular arranged symmetrically to one another, e.g. in the form of triangles,
wherein the reference line (201) is represented using shading which is represented more intensively in particular in the direction of the lane change request,
wherein the reference line (201) is represented using a pattern gradient which is represented more densely in particular in the direction of the lane change request,
and/or wherein the reference line (201) is represented using a color gradient which changes in particular in the direction of the lane change request,
and/or wherein different representations of the reference line (201) are provided as part of user settings.

6. Method according to any of the preceding claims,
wherein the lane change instruction (202) is represented in the form of a directional instruction, in particular in the form of an S-shaped arrow, which preferably passes through the reference line (201),
and/or wherein the lane change instruction (202) is represented by the reference line (201) itself,
and/or wherein different representations of the lane change instruction (202) are provided as part of user settings.

7. Computer program product comprising commands which, when the computer program is executed by a computer, cause the computer to carry out a method according to any of the preceding claims.

8. Control device (110) for controlling a display device (101) of a navigation system (100) of a vehicle (F), comprising:
a storage device and a computing device,
wherein a code is stored in the storage device,
and wherein, when the code is executed by the computing device, a method according to any of the preceding claims is carried out.

9. Display device (101) of a navigation system (100) of a vehicle (F), comprising a control device (110) according to the preceding claim.

10. Vehicle (F) comprising a display device (101) according to the preceding claim.

## Revendications

1. Procédé permettant de commander un dispositif d'affichage (101) d'un
système de navigation (100) d'un véhicule (F), en particulier lors d'un changement de voie par le véhicule (F),
le procédé présentant les étapes suivantes :
- détection d'une demande de changement de voie,
- détermination d'une limite de voie (200) pour la demande de changement de voie,
- fourniture d'une ligne de référence (201) pour la limite de voie (200) dans un champ de vision (10) du dispositif d'affichage (101), dans lequel la ligne de référence (201) fournit une illustration graphique de la limite de voie (200) sur un écran du dispositif d'affichage (101),
- fourniture d'une indication de changement de voie (202) à l'aide de la ligne de référence (201) sur le dispositif d'affichage (101),
dans lequel la ligne de référence (201) est agencée de telle sorte dans le champ de vision (10) du dispositif d'affichage (101),
que la ligne de référence (201) est positionnée dans un champ de vision (20) à travers une vitre (S) de véhicule du véhicule (F), à une distance latérale déterminée (A) par rapport à la limite de voie (200), dans lequel la distance latérale déterminée (A) est réglée proportionnellement au rapport (V21) entre une largeur (B2) du champ de vision (20) à travers la vitre (S) de véhicule et une largeur (B1) du champ de vision (10) du dispositif d'affichage (101),
dans lequel la ligne de référence (201) est agencée à une deuxième distance latérale (A1) d'une limite (11) du champ de vision (10) du dispositif d'affichage (101) en direction de la limite de voie (200), dans lequel la deuxième distance latérale (A1) est réglée par rapport à une troisième distance latérale (A2) entre la limite de voie (200) et une limite (21) correspondante du champ de vision (20) à travers la vitre (S) de véhicule selon un rapport de proportion, qui correspond sensiblement à un rapport (V12) entre la largeur (B1) du champ de vision (10) du dispositif d'affichage (101) et la largeur (B2) du champ de vision (20) à travers la vitre (S) de véhicule, dans lequel la distance latérale déterminée (A) est mesurée sur une coordonnée en hauteur du champ de vision (10) du dispositif d'affichage et/ou du champ de vision (20) à travers la vitre de véhicule entre des parties correspondantes de la ligne de référence (201) et de la limite de voie (200), et dans lequel la deuxième distance latérale (A1) et la troisième distance latérale (A2) sont mesurées sur
une coordonnée en hauteur du champ de vision (10) du dispositif d'affichage et/ou du
champ de vision (20) à travers la vitre de véhicule entre les parties correspondantes de la ligne de référence (201) ou de la limite de voie (200) et la limite (11, 21) respective.

2. Procédé selon la revendication 1,
dans lequel seule une ligne de référence (201) est représentée pour une demande de changement de voie,
et/ou dans lequel, en cas de multiples demandes de changement de voie, une ligne de référence (201) est respectivement illustrée par changement de voie à venir,
dans lequel en particulier les lignes de référence (201) sont agencées de manière correspondant à un ordre des changements de voie à venir.

3. Procédé selon la revendication 1 ou 2,
dans lequel la distance latérale déterminée (A) est réglée de telle sorte que la ligne de référence illustre sensiblement une apparence globale de la limite de voie (200) dans le champ de vision (20) à travers la vitre (S) de véhicule sur le champ de vision (10) du dispositif d'affichage (101), sans couper la limite (11) du champ de vision (10) du dispositif d'affichage (101) en direction de la limite de voie (200) et/ou sans fausser la perspective de la ligne de référence par comparaison avec la perspective de la limite de voie (200).

4. Procédé selon l'une des revendications précédentes,
dans lequel la ligne de référence (201) est représentée en perspective de manière correspondante dans le champ de vision (10) du dispositif d'affichage (101) par rapport à une apparence de la limite de voie (200) dans le champ de vision (20) à travers la vitre (S) de véhicule,
et/ou dans lequel la ligne de référence (201) est représentée dans le champ de vision (10) du dispositif d'affichage (101)
selon un rapport de proportion qui correspond essentiellement à un rapport (V12) entre la largeur (B1) du champ de vision (10) du dispositif d'affichage (101) et la largeur (B2) du champ de vision (20) à travers la vitre (S) de véhicule.

5. Procédé selon l'une des revendications précédentes,
dans lequel la ligne de référence (201) est représentée par une pluralité de symboles, en particulier agencés symétriquement les uns par rapport aux autres, par exemple sous la forme de triangles,
dans lequel la ligne de référence (201) est représentée avec une nuance dont l'intensité augmente en particulier en direction de la demande de changement de voie,
dans lequel la ligne de référence (201) est représentée avec un dégradé de motif dont la densité augmente en particulier en direction de la demande de changement de voie, et/ou dans lequel la ligne de référence (201) est représentée avec un dégradé de couleur qui varie en particulier en direction de la demande de changement de voie,
et/ou dans lequel différentes représentations de la ligne de référence (201) sont fournies dans le cadre des réglages utilisateur.

6. Procédé selon l'une des revendications précédentes,
dans lequel l'indication de changement de voie (202) est représentée sous la forme d'une indication de direction, en particulier sous la forme d'une flèche en S, qui traverse de préférence la ligne de référence (201),
et/ou dans lequel l'indication de changement de voie (202) est représentée par la ligne de référence (201) elle-même,
et/ou dans lequel différentes représentations de l'indication de changement de voie (202) sont fournies dans le cadre des réglages utilisateur.

7. Produit-programme d'ordinateur, comprenant des instructions qui, lorsque le programme d'ordinateur est exécuté par un ordinateur, amènent celui-ci à mettre en œuvre un procédé selon l'une des revendications précédentes.

8. Dispositif de commande (110) permettant de commander un dispositif d'affichage (101) d'un système de navigation (100) d'un véhicule (F), présentant :
un dispositif de mémoire et un dispositif de calcul,
dans lequel un code est enregistré dans le dispositif de mémoire,
et dans lequel, lors de l'exécution du code par le dispositif de calcul, un procédé selon l'une des revendications précédentes est exécuté.

9. Dispositif d'affichage (101) d'un système de navigation (100) d'un véhicule (F), présentant un dispositif de commande (110) selon la revendication précédente.

10. Véhicule (F), présentant un dispositif d'affichage (101) selon la revendication précédente.
